# EUROPEAN PATENT APPLICATION

(11) **EP 1 734 090 A2**
(43) Date of publication of application: **20.12.2006**
(21) Application number: 06253035.7
(22) Date of filing: 13.06.2006
(51) Int. Cl.: C09D 183/04, C09D 127/12

(54) **Erosion resistant anti-icing coatings**

(30) Priority: 13.06.2005 US 150910
(71) Applicant: UNITED TECHNOLOGIES CORPORATION, Hartford, Connecticut 06101 (US)
(72) Inventor: Putnam, John W., Glastonbury, CT 06033 (US)
(74) Representative: Towler, Philip Dean

(57) **Abstract**

Liquid and/or solid anti-icing fillers and/or oils are combined with erosion resistant silicone and/or fluorocarbon elastomeric materials to create erosion resistant anti-icing coatings. These coatings may be utilized to prevent ice build-up on various gas turbine engine components, aircraft components, watercrafts (i.e., boats and ships), power lines, telecommunication lines, etc.

## Description

### FIELD OF THE INVENTION

The present invention relates generally to coatings, and more specifically, to erosion resistant anti-icing coatings for use on various components.

### BACKGROUND OF THE INVENTION

Ice build-up on aircraft and gas turbine engine structures has been a longstanding problem in the aerospace community. The physical presence of ice can adversely impact the aerodynamic performance of airfoils such as wings, fan blades, inlet guide vanes, fan exit guide vanes, etc. Additionally, the added weight of ice build-up can place unanticipated loads on components and, in extreme cases, may even exceed the capability of such components. Furthermore, the ice build-up can shed, which may cause severe damage to an aircraft or engine.

Anti-icing systems have been developed to prevent ice build-up on various aircraft components, such as those near the inlet of the engine. Many traditional systems utilize high temperature air from within the core of the engine, which is pumped to the areas where heat is needed to prevent ice build-up. Such systems have many disadvantages: they are complex, they add significant weight to the engine, they require complicated thermal management systems, they lead to decreased engine efficiency due to the lost core airflow, and they often require costly materials or limit the materials that can be used for components due to the high deicing temperatures that are utilized. As such, even a partial solution to the ice build-up problem could have major economic benefits (i.e., if the anti-icing systems could be simpler, weigh less, and/or use less core airflow for heat, etc.).

Icephobic coatings, coatings to which ice will not adhere well, may reduce or eliminate the need for traditional anti-icing systems. However, many existing icephobic coatings are based on a thermoplastic or thermosetting resin that may contain solid or liquid fillers. Unprotected thermoset or thermoplastic materials typically have poor erosion resistance, and adding solid or liquid fillers further decreases their erosion resistance. This is undesirable because the engine and aircraft components that most need ice build-up protection are positioned in severely erosive environments. Therefore, it would be desirable to have icephobic coatings that have better erosion resistance than existing icephobic coatings.

### SUMMARY OF THE INVENTION

The above-identified shortcomings of existing icephobic coatings are overcome by embodiments of the present invention, which relates to improved icephobic coatings. Liquid and/or solid anti-icing fillers and/or oils are combined with erosion resistant silicone and/or fluorocarbon elastomeric materials to create the erosion resistant icephobic coatings of this invention. These coatings may have ice adhesion strengths of less than about 200kPa and may be utilized to prevent ice build-up on various components, such as, but not limited to, gas turbine engine components, aircraft components, watercrafts (i.e., boats and ships), power lines, telecommunication lines, etc.

Embodiments of these erosion resistant icephobic coatings may comprise: (a) a silicone elastomer comprising at least one silicone-compatible oil; (b) a silicone elastomer comprising at least one silicone-compatible oil and at least one silicone-compatible filler; (c) a fluorocarbon elastomer comprising at least one fluorocarbon-compatible oil having a molecular weight of about 500-10,000 atomic mass units; (d) a fluorocarbon elastomer comprising at least one fluorocarbon-compatible filler; or (e) a fluorocarbon elastomer comprising at least one fluorocarbon-compatible oil having a molecular weight of about 500-10,000 atomic mass units and at least one fluorocarbon-compatible filler.

Further details of this invention will be apparent to those skilled in the art during the course of the following description.

### DESCRIPTION OF THE DRAWING

Embodiments of this invention are described herein below with reference to the figure, which is a schematic drawing showing the pin shear test apparatus that was utilized for testing various embodiments of this invention.

### DETAILED DESCRIPTION OF THE INVENTION

For the purposes of promoting an understanding of the invention, reference will now be made to some embodiments of this invention. The terminology used herein is for the purpose of description, not limitation. Specific structural and functional details disclosed herein are not to be interpreted as limiting, but merely as a basis for teaching one skilled in the art to variously employ the present invention. Any modifications or variations in the depicted structures and methods, and such further applications of the principles of the invention as illustrated herein, as would normally occur to one skilled in the art, are considered to be within the scope of this invention as described and claimed.

When referring to numerical ranges of values, such ranges include each and every number and/or fraction thereof at and between the stated range minimum and maximum. For example, a range of up to about 10.0 weight percent includes all intermediate values of about 0.0, about 1.0, about 2.0, about 3.0 weight percent etc., all the way up to and including about 9.98, about 9.99, about 9.995 and about 10.0 weight percent, etc. This applies to all the numerical ranges of values discussed herein.

This invention relates to icephobic coatings having improved erosion resistance. As used herein and throughout, an "icephobic coating" is either a coating to which ice will not adhere, or a coating where the ice adhesion strength thereto is greatly reduced relative to that of the underlying substrate. Unlike existing icephobic coatings, which are based on thermoplastic or thermosetting resins that may contain solid or liquid fillers, the icephobic coatings of this invention are based on erosion resistant elastomeric materials that contain solid and/or liquid anti-icing oils and/or fillers.

The icephobic coatings of this invention may comprise various elastomeric materials filled with the appropriate icephobic additives. High strength silicone is one elastomeric material that may be used in environments from about -90°F (-68°C) up to about 400°F (204°C). Fluorocarbon elastomers are other elastomeric materials that may be used in environments from about -25°F (-32°C) up to about 400°F (204°C). Polyurethane elastomers may also be used since they have excellent erosion resistance, however, their poor high temperature thermal stability limits them to use in environments from about -65°F (-54°C) up to about 250°F (121°C). In embodiments of the invention, fluorocarbon elastomers may be desirable because low temperature fluorocarbon elastomers, such as Viton^{®} GLT, have a much better high temperature erosion resistance than silicone elastomers. In other embodiments of the invention, silicone elastomers may be desirable because they have much lower ice adhesion strengths than fluorocarbon elastomers.

Ice is one of the few substances that will adhere to most known polymers, including high strength silicone elastomers, fluorocarbon elastomers, polyurethane elastomers, polytetrafluoroethylene (PTFE also known as Teflon® polymer), etc. One way to prevent ice adhesion to such materials involves providing a fluid interface or weak boundary layer on the surface of the materials so that ice cannot adhere thereto. In preferred embodiments of the invention, the fluid interfaces or weak boundary layers on the surface of the materials provide ice adhesion strengths of less than about 200 kPa.

In embodiments of the invention, a weak boundary layer on the surface of a component may be achieved by coating a substrate with a coating that has an unreactive high molecular weight silicone polymer oil (i.e., polydimethyl siloxane, polymethyl phenyl siloxane, and/or polytrifluoropropylmethyl siloxane, etc.), typically incorporated in a silicone elastomer (i.e., platinum cured vinyl terminated polydimethyl siloxane, peroxide cured vinyl terminated polydimethyl siloxane, polyphenylmethyl siloxane, polytrifluoropropylmethyl siloxane, etc.). In embodiments of the invention, typically up to about 10 weight percent of such oils may be utilized. Such oils have partial to complete solubility in the silicone elastomer and will not rapidly diffuse out of the elastomer. Instead, such oils will remain in the bulk of the silicone elastomer and provide useful anti-icing properties throughout the life (i.e., thickness) of the coating.

In other embodiments of the invention, a weak boundary layer on the surface of a component may be achieved by coating a substrate with a coating that has a fluorocarbon or perfluorocarbon oil (i.e., perfluoroalkylether - also known as Krytox® fluorinated lubricant), typically incorporated in a low temperature fluorocarbon elastomer (i.e., vinylidene fluoride, tetrafluoroethylene, perfluoromethylvinylether, perfluoroether, hexafluoropropylene, etc.). Typically, up to about 10 weight percent of such oils having a molecular weight of about 500-10,000 atomic mass units may be utilized.

In yet other embodiments of the invention, a weak boundary layer on the surface of a component may be achieved by coating a substrate with a low temperature fluorocarbon elastomeric coating comprising at least one fluorocarbon-compatible filler that reduces the energy needed to shed ice from the elastomer. Such fillers may comprise very low adhesion fillers such as, for example, fine PTFE powder (i.e., Teflon® polymer powder), and/or fillers having very weak cleavage planes, such as, for example, graphite, molybdenum sulfide and/or similar inorganic oxides.

In still other embodiments of the invention, a weak boundary layer on the surface of a component may be achieved by coating a substrate with an elastomeric silicone coating comprising at least one silicone-compatible oil and at least one silicone-compatible filler. Such fillers may comprise very low adhesion fillers such as, for example, fine PTFE powder (i.e., Teflon® polymer powder), and/or fillers having very weak cleavage planes, such as, for example, graphite, molybdenum sulfide and/or similar inorganic oxides. In addition, such fillers may also comprise one or more chemically treated filler, such as, for example, hydroxyl or vinyl treated fumed silica, quartz and/or precipitated glass, which help uniformly disperse the oil in the elastomer and keep it permanently in the bulk of the elastomer so it cannot diffuse out therefrom, thereby providing useful anti-icing properties throughout the life (i.e., thickness) of the coating. Such oils may comprise polydimethyl siloxane, polymethyl phenyl siloxane, and/or polytrifluoropropylmethyl siloxane, etc.

In yet other embodiments of the invention, a weak boundary layer on the surface of a component may be achieved by coating a substrate with a fluorocarbon elastomeric comprising at least one fluorocarbon-compatible oil and at least one fluorocarbon-compatible filler. Such fillers may comprise very low adhesion fillers such as, for example, fine PTFE powder (i.e., Teflon® polymer powder), and/or fillers having very weak cleavage planes, such as, for example, graphite, molybdenum sulfide and/or similar inorganic oxides. Such oils may comprise perfluoroalkylether (also known as Krytox® fluorinated lubricant), etc. Typically, up to about 10 weight percent of such oils having a molecular weight of about 500-10,000 atomic mass units may be utilized.

The icephobic coatings of the present invention may be applied to a component in any suitable manner, such as, but not limited to, by conventional solvent assisted spraying, electrostatic spraying, brushing, dipping, and/or adhesive bonding in sheet form, etc. After these icephobic coatings are applied, they may be cured in an oven at temperatures from about 60°C (140°F) to about 177°C (350°F) to remove the solvent and create a cross-linked elastomer.

The icephobic coatings of this invention may be utilized on various components that comprise any suitable material, such as, but not limited to, aluminum, titanium, steel, glass, ceramic, composites, magnesium, and/or nickel or cobalt based superalloys, etc. Some exemplary components include, but are not limited to, gas turbine engine components (i.e., stators, guide vanes, inlets, nose cones, fan blades, leading edge structures, etc.), aircraft components (i.e., wings, fuselage, propellers, etc.), watercrafts (i.e., boats and ships), power lines, and telecommunication lines, etc.

### EXAMPLES

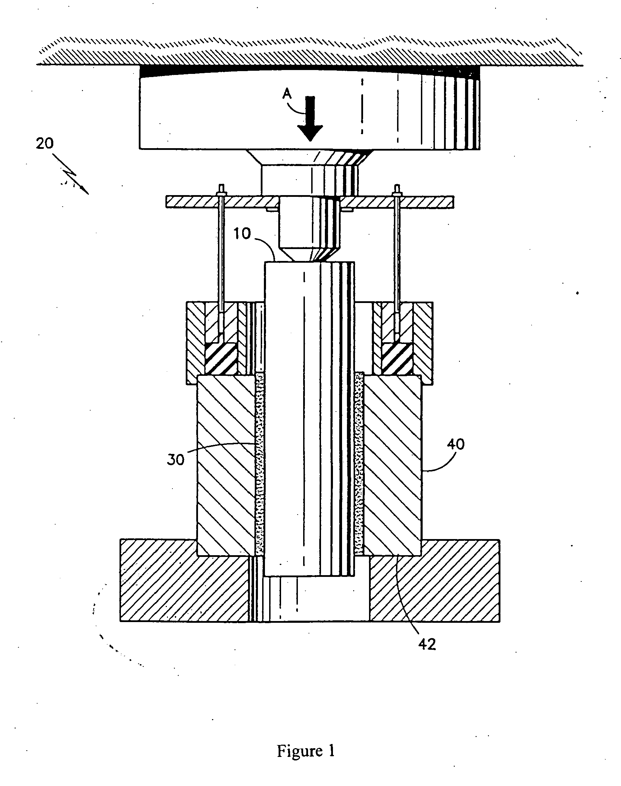

Various icephobic coatings of this invention were prepared and tested for their respective ice adhesion strengths by coating various aluminum pins with a layer of an exemplary icephobic coating. Each coated pin 10 was positioned in a zero degree cone test apparatus 20 as shown in figure 1, where a layer of ice 30 about 254 ± 51 µm (10 ± 2 mil) thick was then grown on each coated pin 10 in the annular gap between the coated pin 10 and the mold 40. The ice 30 was grown by holding the apparatus 20 at a temperature of about -23.3 ± 5.6°C (-10 ± 10 °F) for about 6 ± 1 hours. Thereafter, the ice adhesion strength on each coated pin 10 was determined quantitatively via a pin shear test. The pin shear test involved constraining the mold at its base 42 while the pin was loaded axially in the direction of arrow A. This put the ice 30 into shear, and allowed the load at which the ice de-bonded from each coated pin 10 to be determined.

Various fluorocarbon elastomeric coatings were evaluated. The base fluorocarbon elastomer was a solvated terpolymer of vinylidene fluoride, tetrafluoroethylene and perfluoromethylvinylether (also known as PLV3198 Viton^{®} GLT). Nine different coatings were created and applied to sample pins, one coating having no filler or oil and acting as an unfilled baseline, and eight coatings incorporating various DuPont Krytox® fluorinated oils, as shown in Table I. Krytox® 143 AB has a molecular weight of about 3700 atomic mass units. Krytox® 143 AD has a molecular weight of about 8250 atomic mass units. Krytox® FSH has a molecular weight of about 7000-7500 atomic mass units. Krytox® FSL has a molecular weight of about 2500 atomic mass units.

**TABLE I.**

| Sample # | Filler | Average Pin Shear Strength (kPa) |
|---|---|---|
| 8 | 3 weight percent Krytox^{®} FSL | 115 |
| 7 | 10 weight percent Krytox^{®} FSH | 163 |
| 3 | 10 weight percent Krytox^{®} 143 AB | 167 |
| 4 | 3 weight percent Krytox^{®} 143 AD | 217 |
| 1 | None - Unfilled baseline | 242 |
| 2 | 3 weight percent Krytox^{®} 143 AB | 244 |
| 6 | 3 weight percent Krytox^{®} FSH | 252 |
| 9 | 10 weight percent Krytox^{®} FSL | 278 |
| 5 | 10 weight percent Krytox^{®} 143 AD | 384 |

A sample coating about 0.28 mm (0.011 ") thick was applied to each shear pin by solvent assisted spraying, and each coated pin was then cured at about 149°C (300°F) for about two hours. Three coated pins were created for each sample coating. Once coated, each pin was tested as described above on the apparatus shown in figure 1. The average pin shear strength is a measure of ice adhesion. A lower average pin shear strength means less energy is required to shed the ice therefrom, which makes it less likely that ice will build-up thereon. Teflon^{®} polymer has an average pin shear strength of about 238 kPa, which was the lowest known value of ice adhesion for a solid material. However Teflon^{®} polymer is inadequate for preventing ice build-up for gas turbine engine applications, and is also difficult to apply to aerospace composite components. As seen by the average shear strengths in Table I above, samples 8, 7, 3 and 4 exhibited less ice adhesion than the Teflon^{®} polymer, while samples 1, 2, 6, 9 and 5 exhibited more ice adhesion than the Teflon^{®} polymer. This is significant because fluorocarbon erosion resistant coatings can be readily applied to composite and metal structures in various manners, such as by solvent assisted spraying, electrostatic spraying, dipping, brushing on liquid fluorocarbon, co-curing and/or secondarily bonding fluorocarbon sheet on a substrate, etc. Fluorocarbon erosion resistant coatings also offer excellent resistance to aircraft fluids.

Various silicone elastomeric coatings were also evaluated. The base silicone elastomer was MED 10-6640, a platinum cured vinyl terminated polydimethyl siloxane that was obtained from NuSil Technology. Seven different coatings were created and applied to sample pins, one coating having no filler or oil and acting as an unfilled baseline, and six coatings incorporating various oils/fluids, as shown in Table II. The "Me2 fluid" was a 100 Pa.s (100,000 cps) polydimethyl siloxane fluid, available from Nusil Silicone Technology. The "Gum Me2 fluid" was a high viscosity (i.e., greater than about 1000 Pa.s (1,000,000 cps)) polydimethyl siloxane fluid, available from Nusil Silicone Technology. The "Phenyl Me fluid" was a 100 Pa.s (100,000 cps) polyphenylmethyl siloxane fluid, available from Nusil Silicone Technology. The "Fluorosilicone fluid" was a 100 Pa.s (100,000 cps) polytrifluoropropylmethyl siloxane fluid, available from Nusil Silicone Technology.

**TABLE II.**

| Sample # | Filler | Average Pin Shear Strength (kPa) |
|---|---|---|
| 14 | 10 weight percent Gum Me2 fluid | 40 |
| 12 | 10 weight percent Me2 fluid | 53 |
| 10 | None - Unfilled baseline | 58 |
| 11 | 3 weight percent Me2 fluid | 62 |
| 13 | 3 weight percent Gum Me2 fluid | 67 |
| 16 | 3 weight percent Fluorosilicone fluid | 75 |
| 15 | 3 weight percent Phenyl Me fluid | 91 |

A sample coating about 0.28 - 0.33 mm (0.011-0.013") thick was applied to each shear pin by solvent assisted spraying, and each coated pin was then cured at about 177°C (350°F) for about two hours. Three coated pins were created for each sample coating. Once coated, each pin was tested as described above on the apparatus shown in figure 1. As seen by the average shear strengths in Table II above, all these samples exhibited significantly less ice adhesion than the Teflon^{®} polymer. This is significant because silicone erosion resistant coatings can be readily applied to composite and metal structures as a solution in various manners, such as by conventional solvent assisted spraying, electrostatic spraying, brushing, dipping, and/or adhesive bonding in sheet form, etc. Silicone erosion resistant coatings are also resistant to aircraft fluids.

As described above, this invention provides erosion resistant icephobic coatings for use on various components. Advantageously, these icephobic coatings provide much lower ice adhesions strengths, and equal or better erosion resistance, than existing icephobic coatings, making them desirable for a variety of applications such as, for example, on gas turbine engine components such as stators, guide vanes, inlets, nose cones, fan blades, leading edge structures, etc. Many other embodiments and advantages will be apparent to those skilled in the relevant art.

Various embodiments of this invention have been described in fulfillment of the various needs that the invention meets. It should be recognized that these embodiments are merely illustrative of the principles of various embodiments of the present invention. Numerous modifications and adaptations thereof will be apparent to those skilled in the art without departing from the scope of the present invention. Thus, it is intended that the present invention cover all suitable modifications and variations as come within the scope of the appended claims and their equivalents.

## Claims

1. An erosion resistant icephobic coating comprising at least one of:
a silicone elastomer comprising at least one of: a silicone-compatible oil and a silicone-compatible filler;
a fluorocarbon elastomer comprising at least one of: a fluorocarbon-compatible oil and a fluorocarbon-compatible filler.

2. The erosion resistant icephobic coating of claim 1, wherein the fluorocarbon-compatible oil has a molecular weight of about 500-10,000 atomic mass units.

3. The erosion resistant icephobic coating of claim 1, wherein the silicone-compatible oil comprises at least one of: a polydimethyl siloxane fluid, a polymethyl phenyl siloxane fluid, and a polytrifluoropropylmethyl siloxane fluid.

4. The erosion resistant icephobic coating of claim 1 wherein the silicone elastomer comprises up to about 10 weight percent of a polydimethyl siloxane fluid.

5. The erosion resistant icephobic coating of claim 1 wherein the silicone elastomer comprises up to about 10 weight percent of a polymethyl phenyl siloxane fluid.

6. The erosion resistant icephobic coating of claim 1 wherein the silicone elastomer comprises up to about 10 weight percent of a polytrifluoropropylmethyl siloxane fluid.

7. The erosion resistant icephobic coating of claim 1 wherein the fluorocarbon elastomer comprises up to about 10 weight percent of a fluorocarbon oil having a molecular weight of about 500-10,000 atomic mass units.

8. The erosion resistant icephobic coating of claim 1 wherein the fluorocarbon elastomer comprises up to about 10 weight percent of a perfluorocarbon oil having a molecular weight of about 500-10,000 atomic mass units.

9. The erosion resistant icephobic coating of claim 1, wherein the silicone elastomer comprises at least one of: a platinum cured vinyl terminated polydimethyl siloxane, a peroxide cured vinyl terminated polydimethyl siloxane, polyphenylmethyl siloxane, and polytriflubropropylmethyl siloxane.

10. The erosion resistant icephobic coating of claim 1, wherein the silicone-compatible filler comprises at least one of: PTFE, graphite, molybdenum sulfide, an inorganic oxide, quartz, precipitated glass, hydroxyl treated fumed silica, and vinyl treated fumed silica.

11. The erosion resistant icephobic coating of claim 1, wherein the fluorocarbon elastomer comprises at least one of: vinylidene fluoride, tetrafluoroethylene, perfluoromethylvinylether, perfluoroether, and hexafluoropropylene.

12. The erosion resistant icephobic coating of claim 1, wherein the fluorocarbon-compatible oil comprises a perfluoroalkylether oil.

13. The erosion resistant icephobic coating of claim 1, wherein the fluorocarbon-compatible filler comprises at least one of: PTFE, graphite, molybdenum sulfide, and an inorganic oxide.

14. The erosion resistant icephobic coating of any preceding claim, wherein the erosion resistant icephobic coating has an ice adhesion strength of less than about 200 kPa.

15. The erosion resistant icephobic coating of any preceding claim, wherein any oils or fillers are dispersed through the elastomer to provide anti-icing properties throughout the life of the erosion resistant coating.

16. A component coated by the erosion resistant icephobic coating of any preceding claim.

17. The component of claim 15, wherein the component comprises at least one of: an aircraft component, a gas turbine engine component, a watercraft component, a power line, and a telecommunications line.

18. The component of claim 15, wherein the gas turbine engine component comprises at least one of: a stator, a guide vane, an inlet, a nose cone, a fan blade, a wing, a fuselage, and a propeller.

19. A component coated with an erosion resistant icephobic coating having an ice adhesion strength of less than about 200kPa and comprising at least one of:
a silicone elastomer comprising at least one of: a silicone-compatible oil and a silicone-compatible filler; and
a fluorocarbon elastomer comprising at least one of: a fluorocarbon-compatible oil and a fluorocarbon-compatible filler.
